(19) Europäisches Patentamt
European Patent Office
Office européen des brevets

(11) Veröffentlichungsnummer: **0 047 376**
**B1**

# (12) EUROPÄISCHE PATENTSCHRIFT

(45) Veröffentlichungstag der Patentschrift: **27.06.84**

(51) Int. Cl.³: **C 09 B 29/08,** C 09 B 43/20

(21) Anmeldenummer: **81105506.0**

(22) Anmeldetag: **14.07.81**

(54) **Mischung von Monoazodispersionsfarbstoffen, Verfahren zu ihrer Herstellung und Verfahren zum Färben und Bedrucken von synthetischem, hydrophobem Fasermaterial unter Verwendung der Mischung.**

(30) Priorität: **14.08.80 DE 3030696**

(43) Veröffentlichungstag der Anmeldung: **17.03.82 Patentblatt 82/11**

(45) Bekanntmachung des Hinweises auf die Patenterteilung: **27.06.84 Patentblatt 84/26**

(84) Benannte Vertragsstaaten: **BE CH DE FR GB IT LI**

(56) Entgegenhaltungen:
**DE - B - 1 282 815**
**JP - A - 55 127 463**
**US - A - 2 891 942**

(73) Patentinhaber: **CASSELLA Aktiengesellschaft, Hanauer Landstrasse 526, D-6000 Frankfurt am Main 61 (DE)**

(72) Erfinder: **Ribka, Joachim, Dr., Rügener Strasse 4, D-6050 Offenbach/Main (DE)**
Erfinder: **Tappe, Horst, Dr., Ringstrasse 9, D-6057 Dietzenbach (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 047 376 B1

**Beschreibung**

Die Erfindung betrifft eine Mischung von Monoazodispersionsfarbstoffen, die 85 bis 95 Gew.-% eines Farbstoffs der Formel I

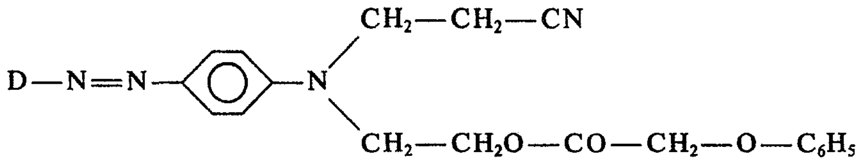

(I)

und 15 bis 5 Gew.-% eines Farbstoffs der Formel II

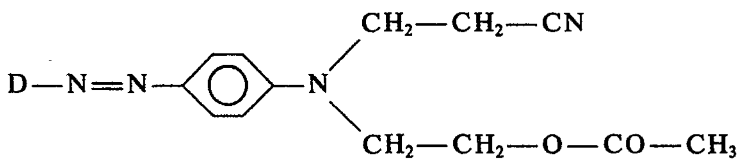

(II)

bezogen auf 100 Gew.-% dieses Farbstoffgemischs und gegebenenfalls noch eine andere oder mehrere andere übliche Komponenten enthält, worin D einen sich von einer Diazokomponente der Benzol-, Thiazol-, Thiophen-, Benzthiazol- oder Benzisothiazol-Reihe ableitenden Rest bedeutet, der auch bis zu drei nicht wasserlöslichmachende, in Azodispersionsfarbstoffen übliche Substituenten tragen kann.

Die Erfindung betrifft außerdem ein Verfahren zur Herstellung von Mischungen derartiger Monoazodispersionsfarbstoffe und ein Verfahren zum Färben und Bedrucken von synthetischem, hydrophobem Fasermaterial unter Verwendung dieser Mischungen.

Die Substituenten des Restes D sind nicht wasserlöslichmachende Substituenten, vorzugsweise aus der Reihe Halogen, insbesondere Chlor und Brom, Nitro, Cyan, Alkyl mit 1 bis 4 C-Atomen und Alkoxy mit 1 bis 4 C-Atomen. D ist insbesondere Nitrophenyl, vorzugsweise 4-Nitrophenyl.

Die erfindungsgemäßen Mischungen enthalten neben dem Gemisch aus den Farbstoffen I und II gegebenenfalls noch eine andere oder mehrere andere Komponenten, wie z. B. Wasser und/oder ein Hilfsmittel oder Hilfsmittelgemisch. Derartige Hilfsmittel sind z. B. Stell-, Dispergier-, Mahlhilfs-, Netz-, Konservierungs-, Entstaubungsmittel, ferner Emulgatoren und Eintrocknungsverzögerer.

Beispielsweise kann eine erfindungsgemäße Mischung in verkaufsfertiger Pulverform 20 bis 50 Gew.-% des aus den Farbstoffen I und II bestehenden Farbstoffgemischs und als Rest (80 bis 50 Gew.-%) noch eine andere Komponente oder mehrere andere Komponenten, insbesondere ein Hilfsmittel oder Hilfsmittelgemisch, vorzugsweise ein Dispergiermittel oder Dispergiermittelgemisch, enthalten.

Erfindungsgemäße Farbstoffmsichungen können auch in Form von Teigen in den Handel gebracht werden, die zu 60 bis 90 Gew.-% aus Wasser und zu 40 bis 10 Gew.-% aus Feststoffgemisch bestehen, wobei das Feststoffgmisch seinerseits, d. h. bezogen auf 100% Feststoffgemisch, zu 20 bis 50 Gew.-% aus dem Gemisch der Farbstoffe I und II und zu 80 bis 50 Gew.-% aus einer anderen oder mehreren anderen Komponenten, insbesondere aus einem Hilfsmittel oder Hilfsmittelgemisch, besteht.

Die Prozentangaben für die Farbstoffe I und II beziehen sich auf 100% des Gemisches aus den Farbstoffen I und II. Vorzugsweise enthält die erfindungsgemäße Farbstoffmischung, bezogen auf das Gemisch aus den Farbstoffen I und II, 90 Gew.-% des Farbstoffs der Formel I und 10 Gew.-% des Farbstoffs der Formel II.

Ganz besonders bevorzugt ist eine Farbstoffmischung, die, bezogen auf das Gemisch aus den Farbstoffen I und II, 90 Gew.-% des Farbstoffs III und 10 Gew.-% des Farbstoffs IV enthält:

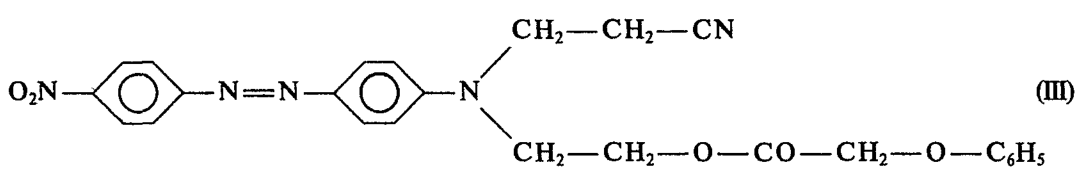

(III)

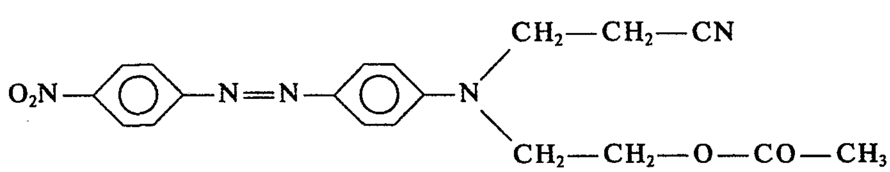

(IV)

Die Einzelfarbstoffe der erfindungsgemäßen Farbstoffmischungen sind zum größten Teil bekannt. Sie lassen sich z. B. in an sich bekannter Weise durch Diazotierung von Diazokomponenten $D-NH_2$ und anschließendes Kuppeln auf eine Kupplungskomponente der Formel V oder VI

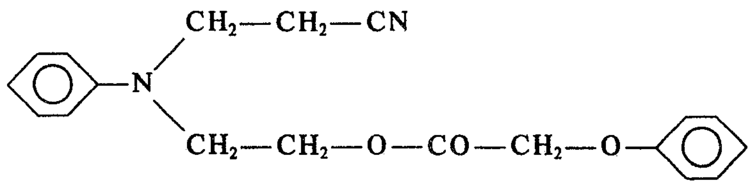

(V)

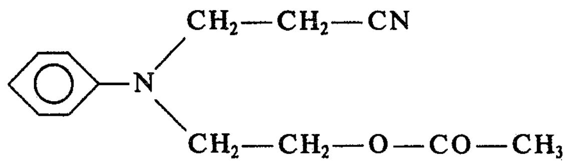

(VI)

herstellen.

Der Farbstoff der Formel IV ist aus Beispiel 3 der GB-A-813 906 und der Farbstoff der Formel III aus dem Tabellenbeispiel 5 der DE-C-1 282 815 bekannt.

Der Farbstoff der Formel III liefert nach Färbe- und Druckverfahren ein brillantes, gelbstichiges Orange auf Polyester mit vorzüglichen Licht-, Thermofixierechtheiten. Der Farbstoff der Formel IV besitzt eine unerwünschte rote Nuance, eine niedrigere Thermofixierechtheit und schlechte pH-Beständigkeit, jedoch aufgrund des niedrigeren Molekulargewichts eine größere Farbstärke.

Überraschenderweise wurde nun gefunden, daß man die wertvollen coloristischen Eigenschaften des Farbstoffs der Formel III erhalten und gleichzeitig den Farbstärkevorteil des Farbstoffs der Formel IV ausnutzen kann, wenn man Mischungen der beiden Farbstoffe herstellt, die 15 bis 5 Gew.-%, bevorzugt 10 Gew.-%, des Farbstoffs der Formel IV und 85 bis 95 Gew.-%, bevorzugt 90 Gew.-%, des Fabstoffs der Formel III enthalten. Zusätzlich zeichnen sich die Mischungen durch ein verbessertes Ziehverhalten und besseren Aufbau aus. Analoge coloristische Vorteile sind auch bei den anderen erfindungsgemäßen Farbstoffmischungen im Vergleich zu den Einzelfarbstoffen zu beobachten.

Die erfindungsgemäßen Farbstoffmischungen können nach verschiedenen Verfahren hergestellt werden, einmal durch Mischung der Einzelfarbstoffe und gegebenenfalls Zusatz der anderen Komponenten, vorzugsweise unter Zusatz von Dispergiermitteln. Dieser Mischprozeß erfolgt zweckmäßigerweise im Verlauf der Überführung der Farbstoffe in eine feindisperse Form, wobei die Farbstoffe naß, d. h. unter Zusatz von Wasser, in Gegenwart von geeigneten Dispergiermitteln so lange behandelt werden, bis eine ausreichende Feinverteilung erreicht ist. In der Regel muß so lange dispergiert werden, bis Teilchengrößen von 0,5 bis 2 μm erreicht sind. Die Mischung bzw. Dispergierung wird in geeigneten Mühlen, beispielsweise Kolloid-, Perl-, Kugel- und Sandmühlen oder Kneter durchgeführt. Die erhaltenen Teige werden als solche verwendet, oder sie werden durch Trocknung in ein pulverförmiges Gemisch überführt.

Als Dispergiermittel kommen solche anionischer oder nichtionischer Natur in Betracht. Als anionische Dispergiermittel seien Kondensationsprodukte von Naphthalin, Formaldehyd und Schwefelsäure sowie Ligninsulfonate genannt. Nichtionische Dispergiermittel sind z. B. in der DE-A-2 757 330 beschrieben.

Die Einzelfarbstoffe können, wie bereits erwähnt, durch Diazotierung und Kupplung hergestellt werden. Eine andere Darstellungsmöglichkeit für die Einzelfarbstoffe besteht darin, daß man zunächst Farbstoffe der Formel VII

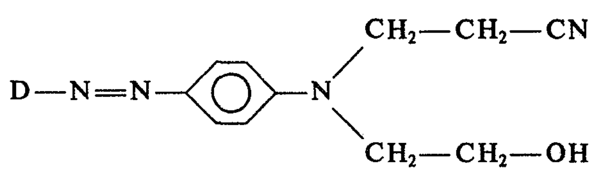

(VII)

durch Diazotieren von $D-NH_2$ und anschließendes Kuppeln auf N-β-Cyanethyl-n-β-hydroxyethylanilin der Formel VIII

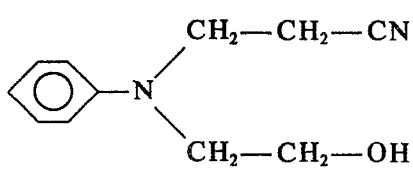

(VIII)

in an sich bekannter Weise herstellt und die Farbstoffe der Formel VII zur Einführung des Phenoxyacetylrests mit geeigneten Phenoxyacetylierungsmitteln, wie z. B. Phenoxyacetylchlorid, und zur Einführung des Acetylrests mit einem geeigneten Acetylierungsmittel, wie z. B. Acetylchlorid oder Acetanhydrid, umsetzt.

Ein bevorzugtes Verfahren zur Herstellung der Farbstoffmischungen ist dadurch charakterisiert, daß man $D-NH_2$, vorzugsweise p-Nitroanilin, diazotiert und auf ein Gemisch der Kupplungskomponenten der Formel V und VI kuppelt und dabei das Verhältnis der Kupplungskomponenten so auswählt, daß erfindungsgemäße Farbstoffmischungen entstehen. Diese Farbstoffmischungen werden dann in an sich bekannter Weise, wie vorstehend bei der Mischung der Einzelfarbstoffe beschrieben, naß, vorzugsweise unter Zusatz von Dispergiermitteln, in eine fein disperse Form überführt, wobei auch hier die hergestellten Teige als solche oder nach ihrer Überführung in Pulver zur Anwendung kommen können.

Die Kupplungskomponenten V und VI sind bekannt. Sie lassen sich aus N-$\beta$-Cyanethyl-N-$\beta$-hydroxyethyl-anilin der Formel VIII durch Veresterung mit Phenoxyacetylchlorid bzw. Essigsäureanhydrid oder -chlorid nach bekannten Verfahren herstellen.

N-$\beta$-Cyanethyl-N-$\beta$-hydroxyethyl-anilin der Formel VIII läßt sich auch vorteilhaft mit Phenoxyessigsäure direkt verestern, wenn man mit einem Schleppmittel das Wasser auskreist. Als Schleppmittel werden Kohlenwasserstoffe, wie Toluol, Benzol etc., oder chlorierte Kohlenwasserstoffe, wie Ethylenchlorid, Chlorbenzol, o-Chlor-toluol, o-Dichlorbenzol eingesetzt. Bevorzugt wird Chlorbenzol.

Bei einer vollständigen Veresterung des Alkohols der Formel VIII mit Phenoxyessigsäure erhält man die Kupplungskomponente der Formel V. Wenn man für eine gemeinsame Kupplung mit einer diazotierten Diazokomponente $D-NH_2$ ein Gemisch der beiden Kupplungskomponenten der Formel V und VI herstellen will, so kann man die Kupplungskomponente der Formel VI der Kupplungskomponente der Formel V in der gewünschten Menge zusetzen. Zweckmäßigerweise stellt man jedoch das benötigte Gemisch der beiden Kupplungskomponenten V und VI so her, daß man die Veresterung des Alkohols VIII mit Phenoxyessigsäure vorzeitig dann abbricht, wenn soviel Ester V gebildet worden ist, wie er dem gewünschten Anteil im späteren Kupplungskomponentengemisch bzw. im späteren Farbstoffgemisch entspricht, dann das Lösungsmittel durch Destillation abtrennt und dann die OH-Gruppen der im Gemisch noch vorhandenen Verbindung VIII mit einem Acetylierungsmittel, wie Acetylchlorid oder Acetanhydrid acetyliert. Man erhält auf diese Weise direkt ein Gemisch der beiden Kupplungskomponenten V und VI in dem gewünschten Mischungsverhältnis.

Die Kupplungskomponenten bzw. die Kupplungskomponentengemische können dann nach an sich bekannten Verfahren mit diazotierten Diazokomponenten $D-NH_2$ gekuppelt werden. Ein Verfahren zur Kupplung mit diazotiertem 4-Nitranilin ist z. B. in der DE-C-2 603 836 beschrieben.

Die erfindungsgemäßen Farbstoffmischungen eignen sich sehr gut zum Färben und Bedrucken von Gebilden aus synthetischen Materialien, wie beispielsweise Polyacrylnitril, Polyamid, Cellulose-$2^1/_2$-acetat, Cellulosetriacetat und insbesondere Polyestermaterialien, z. B. Polyethylenglykolterephthalat. Sie liefern hierauf nach den üblichen Färbe- und Druckverfahren farbstarke, klare, orangene Färbungen und Drucke mit sehr guten Echtheiten, insbesondere sehr guter Licht-, Trockenhitzeplissier- und Trockenhitzefixierechtheit.

Die Farbstoffmischungen zeichnen sich durch sehr gutes Egalisierverhalten bei gutem Thermomigrierverhalten aus.

Das Färben der genannten Materialien erfolgt zweckmäßig aus wäßriger Dispersion in Gegenwart von Carrieren zwischen etwa 80°C und 110°C, in Abwesenheit von Carrieren zwischen etwa 110°C bis 140°C sowie nach dem sogenannten Thermofixierverfahren bei etwa 170°C bis 230°C. Die Farbstoffgemische eignen sich auch zum Färben des Polyesteranteils von Polyester-Wolle-Mischungen bei 100°C in Gegenwart von Carrieren oder bei 106°C unter Druck nach HT-Verfahren. Das Bedrucken der obengenannten Materialien kann so durchgeführt werden, daß die bedruckte Ware in Gegenwart von Carrieren bei Temperaturen zwischen etwa 80°C und 100°C oder auch in Abwesenheit eines Carriers bei etwa 110°C bis 180°C gedämpft oder auch nach dem sogenannten Thermofixierverfahren bei etwa 170°C bis 230°C behandelt wird.

Aus der US-A-2 891 942 sind wasserunlösliche Monoazofarbstoffe bekannt, deren Diazokomponente sich von einem N,N-di-niederalkylsubstituierten Anilin ableitet, wobei die beiden gleichen oder verschiedenen Niederalkyl-Reste zusammen mindestens einen negativen Substituenten und mindestens einen —O-Acyl-Rest mit 1 bis 5 C-Atomen besitzen. In dieser Patentschrift ist angegeben, daß man durch Mischen von zwei oder mehr derartigen Farbstoffen in einigen Fällen die Affinität zur Faser verbessern kann. Der in der erfindungsgemäßen Mischung enthaltene Farbstoff I besitzt einen O-Acylrest mit 8 C-Atomen, ein derartiger Farbstoff ist in der US-A-2 891 942 nicht erwähnt.

Im folgenden bedeuten Teile Gewichtsteile und Prozente Gewichtsprozente.

## Beispiel 1

a) 13,8 Teile p-Nitroanilin werden in 35 Teilen konz. Salzsäure und 80 g Eis bei 0 bis +7°C mit 18,5 Teilen einer 40%igen Natriumnitritlösung im Verlauf von 10 Minuten diazotiert und das Reaktionsgemisch 1 Stunde lang bei 0 bis +7° C nachgerührt. Die erhaltene Diazolösung läßt man bei 40° C im Verlauf von $1^1/_2$ Stunden in eine Lösung von 42,5 Teilen der Kupplungskomponente N-$\beta$-Cyanethyl-N-$\beta$-(phenoxyacetoxy)-ethyl-anilin der Formel V und 3,8 Teilen der Kupplungskomponente N-$\beta$-Cyanethyl-N-$\beta$-(acetoxy)-ethyl-anilin der Formel VI in 50 Teilen Wasser und 160 Teilen Iso-Butanol fließen. Nach einstündigem Nachrühren bei 40° C wird mit 45 Teilen 27%iger Natronlauge auf pH 7 gestellt, durch Außenkühlung auf 20° C abgekühlt, abfiltriert, gewaschen und getrocknet. Man erhält eine Farbstoffmischung, die zu 90% aus dem Farbstoff der Formel III

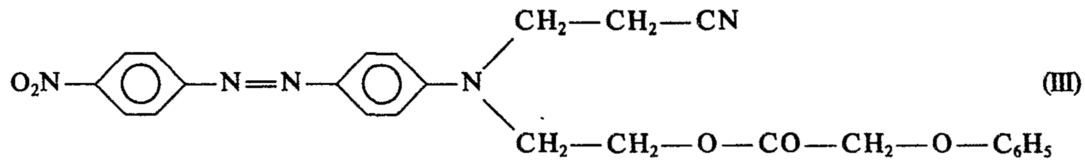

(III)

und zu 10% aus dem Farbstoff der Formel IV

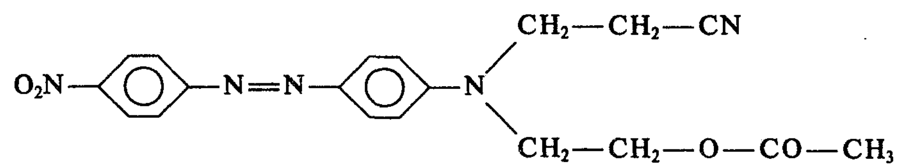

(IV)

besteht.

10 g des nach 1a) erhaltenen Farbstoffs werden mit 10 g Ligninsulfonat und 80 g Wasser in einer Sandmühle bis zur Feinverteilung ≤ 1 µm gemahlen.

1b) 10 g der so erhaltenen Dispersion werden in 2000 Teile Wasser eingerührt. Es wird mit Essigsäure auf einen pH-Wert von 5 bis 6 eingestellt und mit 4 Teilen Ammoniumsulfat und 2 Teilen eines handelsüblichen Dispergiermittels auf Basis eines Naphthalinsulfonsäure-Formaldehyd-Kondensats versetzt.

In die so erhaltene Färbeflotte bringt man 100 Teile eines Polyestergewebes auf Basis Polyethylenglykolterephthalat ein und färbt $1^1/_2$ Stunden bei 120 bis 130° C. Nach anschließendem Spülen, reduktiver Nachbehandlung mit einer 0,2%igen alkalischen Natriumdithionitlösung während 15 Minuten bei 60 bis 70° C, Spülen und Trocknen erhält man farbstarke, gelbstichig orangene Färbungen mit sehr guten Echtheitseigenschaften, insbesondere einer sehr guten Licht-, Trockenhitzeplissier- und Trokkenhitzefixierechtheit.

Die nach 1a) erhaltene Farbstoffmischung zeigt beim Färben ein sehr gutes Zieh- und Aufbauvermögen, die gegenüber den Einzelfarbstoffen der Formeln III und IV verbessert sind. Hervorzuheben ist auch sehr gutes Verhalten beim Marks-and-Spencer-Test.

Beispiel 2

27 Teile des nach DE-C-1 282 815 erhaltenen Farbstoffs der Formel III und 3 Teile des nach GB-A-813 906 erhaltenen Farbstoffs der Formel IV werden mit 30 Teilen Ligninsulfonat und 240 Teilen Wasser in einer Sandmühle bis zu einer Feinverteilung ≤ 1 µm gemahlen und einer Druckpaste, die 45,0 Teile Johannisbrotkernmehl, 6,0 Teile 3-nitrobenzolsulfonsaures Natrium und 3,0 Teile Zitronensäure auf 1000 Teile enthält, einverleibt. Mit dieser Druckpaste erhält man auf einem Polyestergewebe nach dem Bedrucken, Trocknen und Fixieren im Thermofixierrahmen während 45 Sekunden bei 215° C, Spülen und Fertigestellung, wie in Beispiel 1b) beschrieben, einen farbstarken, orangenen Druck mit sehr guten Echtheitseigenschaften, insbesondere einer sehr guten Licht-, Trockenhitzeplissier- und Trockenhitzefixierechtheit.

**Patentansprüche**

1. Mischung von Monoazodispersionsfarbstoffen, die 85 bis 95 Gew.-% eines Farbstoffs der Formel I

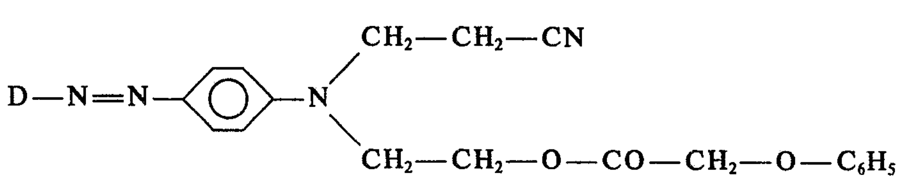

(I)

und 15 bis 5 Gew.-% eines Farbstoffs der Formel II

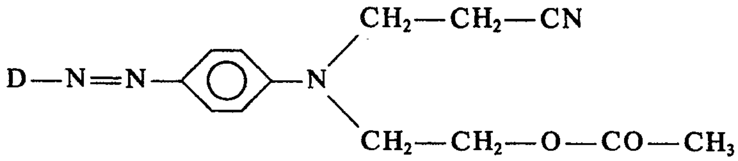

(II)

bezogen auf 100 Gew.-% dieses Farbstoffgemischs und gegebenenfalls noch eine andere oder mehrere andere übliche Komponenten enthält, worin D einen sich von einer Diazokomponente der Benzol-, Thiazol-, Thiophen-, Benzthiazol- oder Benzisothiazol-Reihe ableitenden Rest bedeutet, der auch bis zu drei nicht wasserlöslichmachende, in Azodispersionsfarbstoffen übliche Substituenten tragen kann.

2. Mischung nach Anspruch 1, dadurch gekennzeichnet, daß der Rest D bis zu drei nicht wasserlöslichmachende Substituenten aus der Reihe Halogen, insbesondere Chlor oder Brom, Nitro, Cyan, Alkyl mit 1 bis 4 C-Atomen und Alkoxy mit 1 bis 4 C-Atomen trägt.

3. Mischung nach den Ansprüchen 1 und/oder 2, dadurch gekennzeichnet, daß D 4-Nitrophenyl bedeutet.

4. Mischung nach einem oder mehreren der Ansprüche 1 bis 3, dadurch gekennzeichnet, daß sie, bezogen auf 100% des aus den Farbstoffen I und II bestehenden Gemischs, 90 Gew.-% des Farbstoffs I und 10 Gew.-% des Farbstoffs II enthält.

5. Mischung nach einem oder mehreren der Ansprüche 1 bis 4, dadurch gekennzeichnet, daß sie 20 bis 50 Gew.-% des aus den Farbstoffen I und II bestehenden Farbstoffgemischs und 80 bis 50 Gew.-% eines Hilfsmittels oder Hilfsmittelgemischs, insbesondere eines Dispergiermittels oder Dispergiermittelgemischs, enthält.

6. Mischung nach einem oder mehreren der Ansprüche 1 bis 5, dadurch gekennzeichnet, daß sie zu 60 bis 90 Gew.-% aus Wasser und zu 40 bis 10 Gew.-% aus Feststoffgemisch besteht, wobei das Feststoffgemisch seinerseits zu 20 bis 50 Gew.-% aus dem Gemisch der Farbstoffe I und II und zu 80 bis 50 Gew.-% aus einer anderen oder mehreren anderen Komponenten, insbesondere aus einem Hilfsmittel oder Hilfsmittelgemisch, besteht.

7. Verfahren zur Herstellung der Farbstoffmischung eines oder mehrerer Ansprüche 1 bis 6, dadurch gekennzeichnet, daß man einen Farbstoff der Formel I und einen Farbstoff der Formel II, gegebenenfalls in Gegenwart einer anderen Komponente oder mehreren anderen Komponenten vermischt und dabei, bezogen auf das Gemisch aus den Farbstoffen I und II, 85 bis 95 Gew.-%, vorzugsweise 90 Gew.-%, des Farbstoffs der Formel I und 15 bis 5 Gew.-%, vorzugsweise 10 Gew.-%, des Farbstoffs der Formel II verwendet.

8. Verfahren zur Herstellung der Farbstoffmischung eines oder mehrerer Ansprüche 1 bis 6, dadurch gekennzeichnet, daß man eine Diazokomponente $D-NH_2$, vorzugsweise 4-Nitroanilin, diazotiert und auf ein Gemisch der Kupplungskomponenten

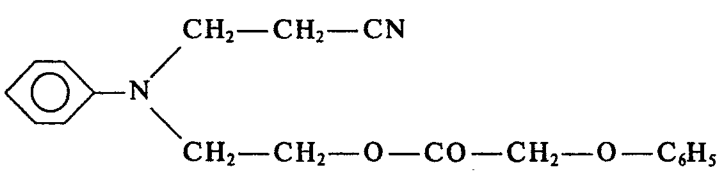

(V)

.

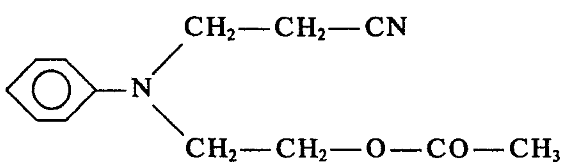

(VI)

kuppelt, wobei das Mengenverhältnis der Kupplungskomponenten so gewählt wird, daß Farbstoffmischungen entstehen, die, bezogen auf das Gemisch aus den Farbstoffen I und II, den Farbstoff der Formel I zu 85 bis 95 Gew.-%, vorzugsweise 90 Gew.-%, und den Farbstoff der Formel II zu 15 bis 5 Gew.-%, vorzugsweise zu 10 Gew.-%, enthalten.

9. Verfahren nach Anspruch 8, dadurch gekennzeichnet, daß man zur Herstellung des benötigten Kupplungskomponentengemischs den Alkohol der Formel VIII

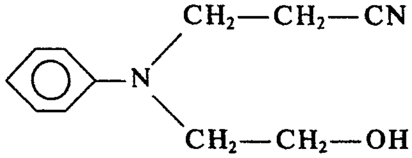

(VIII)

mit Phenoxyessigsäure teilweise verestert, wobei man mit einem Schleppmittel das Wasser auskreist und anschließend die restlichen OH-Gruppen acetyliert.

10. Verfahren zum Färben und Bedrucken von synthetischem, hydrophobem Fasermaterial, insbesondere Polyester und Gemischen solcher Materialien mit Cellulose, dadurch gekennzeichnet, daß man ein Farbstoffgemisch nach einem oder mehreren Ansprüchen 1 bis 5 einsetzt.

## Claims

1. Mixture of monoazo disperse dyestuffs which contains 85 to 95% by weight of a dyestuff of the formula I

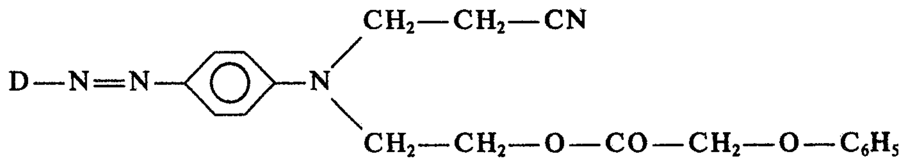

(I)

and 15 to 5% by weight of a dyestuff of the formula II

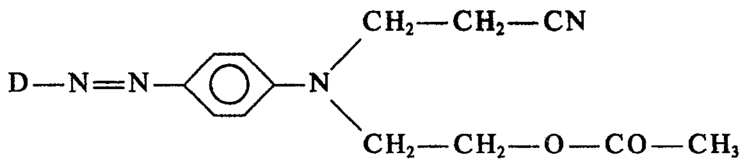

(II)

relative to 100% by weight of said dyestuff mixture, and optionally one or several further customary components, wherein D denotes a radical which is derived from a diazo component of the benzene, thiazole, thiophen, benzthiazole or benzisothiazole series and which can also carry up to three substituents which do not impart solubility in water and are customary in azo disperse dyestuffs.

2. Mixture according to Claim 1, characterised in that the radical D carries up to three substituents which do not impart solubility in water and which belong to the series comprising halogen, in particular chlorine or bromine, nitro, cyano, alkyl having 1 to 4 C atoms and alkoxy having 1 to 4 C atoms.

3. Mixture according to Claims 1 and/or 2, characterised in that D denotes 4-nitrophenyl.

4. Mixture according to one or several of Claims 1 to 3, characterised in that it contains, relative to 100% of the mixture of dyestuffs I and II, 90% by weight of the dyestuff I and 10% by weight of the dyestuff II.

5. Mixture according to one or several of Claims 1 to 4, characterised in that it contains 20 to 50% by weight of the mixture of dyestuffs I and II and 80 to 50% by weight of an auxiliary or a mixture of auxiliaries, in particular of a dispersant or mixture of dispersants.

6. Mixture according to one or several of claims 1 to 5, characterised in that it contains 60 to 90% by weight of water and 40 to 10% weight of a solids mixture, the solids mixture itself consisting of 20 to 50% by weight of the mixture of dyestuffs I and II and 80 to 50% by weight of one or several further components, in particular an auxiliary or mixture of auxiliaries.

7. Process for the manufacture of the dyestuff mixture of one or several of claims 1 to 6, characterised in that a dyestuff of the formula I and a dyestuff of the formula II are mixed, if appropriate in the presence of one or several further components, using, relative to the mixture of dyestuffs I and II, 85 to 95% by weight, preferably 90% by weight, of the dyestuff of the formula I and 15 to 5% by weight, preferably 10% by weight, of the dyestuff of the formula II in this mixing process.

8. Process for the manufacture of the dyestuff mixture of one or several of Claims 1 to 6, characterised in that a diazo component $D-NH_2$, preferably 4-nitroaniline, is diazotised and the product is coupled with a mixture of the coupling components

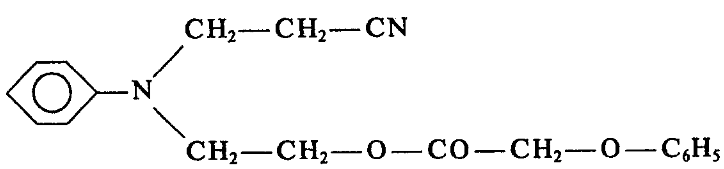

(V)

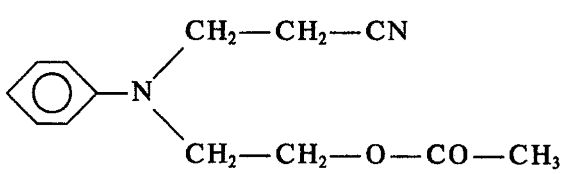

(VI)

the ratio of the copuling components being selected in such a way that dyestuff mixtures containing relative to the mixture of dyestuffs I and II 85 to 95% by weight, preferably 90% by weight, of the dyestuff of the formula I and 15 to 5% by weight, preferably 10% weight, of the dyestuff of the formula II, are formed.

9. Process according to Claim 8, characterised in that, for preparing the required mixture of coupling components, the alcohol of the formula VIII

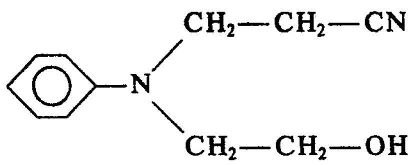

(VIII)

is partially esterified with phenoxyacetic acid, the water formed being removed from the system by means of an entraining agent, and subsequently acetylating the remaining OH groups.

10. Process for dyeing and printing synthetic, waterrepellant fibre material, particularly polyester, and mixtures of such materials with cellulose, characterised in that a dyestuff mixture according to one or several of Claims 1 to 5 is employed.

**Revendications**

1. Mélange de colorants monoazoïques de dispersion, caractérisé en ce qu'il contient 85 à 95% en poids d'un colorant de formule I:

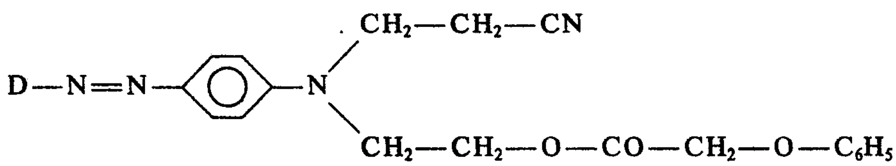

(I)

et 15 à 5% en poids d'un colorant de formule II:

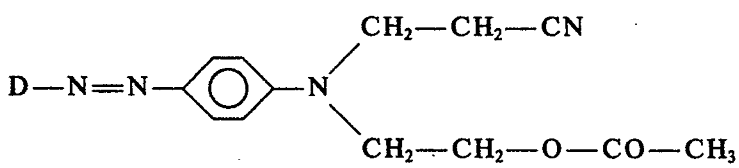

(II)

par rapport à 100% en poids de ce mélange de colorants, et éventuellement encore un autre ou plusieurs autres composants usuels, D représentant un radical dérivant d'un composant diazotable de la série du benzène, du thiazole, du thiophène, du benzothiazole ou du benzisothiazole qui peut aussi porter jusqu'à trois substituants usuels dans les colorants azoïques de dispersion et ne provoquant pas de solubilisation dans l'eau.

2. Mélange selon la revendication 1, caractérisé en ce que le radical D porte jusqu'à trois substituants, ne provoquant pas de solubilisation dans l'eau, pris dans l'ensemble formé par un halogène, notamment le chlore ou le brome, un groupe nitro, cyano, alkyle ayant 1 à 4 atomes de carbone et alcoxy ayant 1 à 4 atomes de carbone.

3. Mélange selon les revendications 1 et/ou 2, caractérisé en ce que D représente un groupe nitro-4 phényle.

4. Mélange selon l'une des revendications 1 à 3, caractérisé en ce qu'il contient, pour 100% du mélange consistant en les colorants I et II, 90% en poids du colorant I et 10% en poids du colorant II.

5. Mélange selon une ou plusiuers des revendications 1 à 4, caractérisé en ce qu'il contient 20 à 50% en poids du mélange des colorants consistant en les colorants I et II et 80 à 50% en poids d'un adjuvant ou mélange d'adjuvants, notamment un agent de dispersion ou un mélange d'agents de dispersion.

6. Mélange selon une ou plusieurs des revendications 1 à 5, caractérisé en ce qu'il consiste pour 60 à 90% en poids en de l'eau et pour 40 à 10% en poids en un mélange de solides, ce mélange de solides consistant pour sa part pour 20 à 50% en poids en le mélange des colorants I et II et pour 80 à 50% en poids en un autre ou plusieurs autres composants, notamment en un adjuvant ou mélange d'adjuvants.

7. Procédé pour préparer le mélange de colorants selon une ou plusieurs des revendications 1 à 6, caractérisé en ce qu'on mélange un colorant de formule I et un colorant de formule II, éventuellement en présence d'un autre composant ou de plusieurs autres composants et en ce qu'on utilise pour cela, par rapport au mélange des colorants I et II, 85 à 95% en poids, avantageusement 90% en poids, du colorant de formule I et 15 à 5% en poids, avantageusement 10% en poids, du colorant de formule II.

8. Procédé de préparation de mélange des colorants selon une ou plusieurs de revendication 1 à 6,

caractérisé en ce qu'on diazote un composant diazotable $D-NH_2$, avantageusement la nitro-4 aniline et l'on copule sur un mélange des copulants:

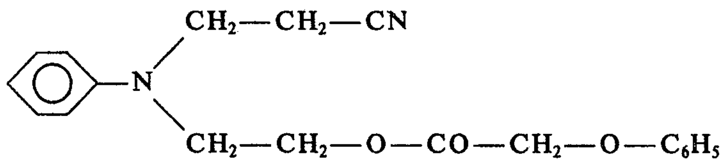

(V)

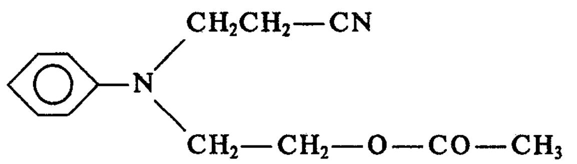

(VI)

en choisissant le rapport des quantités des copulants de manière qu'il en résulte des mélanges de colorants qui, par rapport au mélange des colorants I et II, contiennent le colorant de formule I à raison de 85 à 95% en poids, avantageusement 90% en poids, et le colorant de formule II à raison de 15 à 5% en poids, avantageusement à raison de 10% en poids.

9. Procédé selon la revendication 8, caractérisé en ce que, pour préparer le mélange des copulants nécessaires, on estérifie partiellement l'alcool de formule VIII:

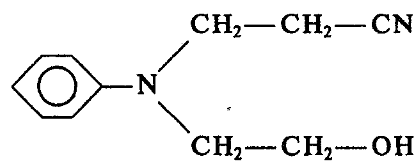

(VIII)

avec l'acide phénoxyacétique, en éliminant l'eau du circuit à l'aide d'un agent d'entraînement, et l'on acétyle en suite les groupes OH résiduels.

10. Procédé pour teindre et imprimer de la matière en fibres synthétiques hydrophobes, notamment du polyester et des mélanges de telles matières avec de la cellulose, procédé caractérisé en ce qu'on utilise un mélange de colorants selon une ou plusieurs revendications 1 à 5.